# EUROPEAN PATENT SPECIFICATION

(11) **EP 0 997 040 B1**
(45) Date of publication and mention of the grant of the patent: **11.12.2002**
(21) Application number: 98933789.4
(22) Date of filing: 10.07.1998
(51) Int. Cl.: H04N 7/14

(54) **VIDEOTELEPHONE COMMUNICATION SYSTEMS**
VIDEOFERNSPRECHERKOMMUNIKATIONSSYSTEME
SYSTEMES DE COMMUNICATION VIDEOPHONIQUE

(30) Priority: 10.07.1997 GB 9714563
(43) Date of publication of application: 03.05.2000
(73) Proprietor: INTELLPROP LIMITED, Guernsey, Channel Islands (GB)
(72) Inventor: WILSON, Jeffrey, Hampshire PO16 7OH (GB)
(74) Representative: Pilch, Adam John Michael
(86) International application number: GB9802065
(87) International publication number: WO99003276

(56) References cited:
- EP-A- 0 528 732
- WO-A-97/16014
- US-A- 4 654 866

## Description

The present invention relates to videotelephone communication systems.

Electronics has greatly facilitated human communication, and in addition to the computer industry, which is primarily concerned with data processing, two major communication industries have arisen, these being telecommunications and broadcasting.

Traditionally the main area of economic activity in telecommunications has been voice telephony. In the past this has been from fixed networks, but there is increasing activity in the mobile area.

In contrast to voice telephony, which is currently primarily concerned with simultaneous communication between two people, the broadcasting industry represented by the cinema, video and television is concerned with the delivery of high bandwidth information or entertainment in which there is one source, which may be live or prerecorded, which is then "broadcast" to many passive viewers.

Although at present there is some blurring of this distinction with some live feed telephone broadcasting services, particularly for horse racing, and some television programmes which offer viewers the chance to participate through the telephone, it is nevertheless true that the main areas of economic activity in these industries follow the traditional model. Recently there has been significant interest in video on demand or near video on demand, but at the moment the cost/benefit analysis does not appear to favour widespread adoption, particularly so given the imminent arrival of large numbers of digital satellite TV channels.

An apparently attractive aspect of video on demand would be its use of existing telephone copper wiring with asymmetric modems so that a subscriber would have a high bandwidth from the system centre and a low bandwidth return channel.

Although this model could be satisfactory in the right economic circumstances for television, it is not a good model for human communication, where one requires equal bandwidth in both directions.

If the developments in telephony which enrich communication in some way are examined, it is possible to identify four strands, all of which seek to overcome the limitations of traditional telephony with its focus on one to one communication, by offering the opportunity to hold meetings on the telephone.

These developments are:
i) high quality loudspeaking handsets so that a number of people can sit round a table and participate easily in a discussion;
ii) audioconferencing systems allowing a number of callers to easily get together for a discussion without the need for physical displacement;
iii) videotelephones so that groups of people can communicate normally on a point to point basis; and
iv) videotelephony conferencing systems allowing a number of individuals or groups of individuals to get together and see each other (usually the current speaker is seen, with the current speaker seeing the last speaker); however, these systems are currently used almost exclusively for business meetings, particularly by large multinational corporations.

Although it is clear that in many circumstances it is cheaper to have a high bandwidth video conference rather than fly from, say, London to Los Angeles, it is not immediately clear whether this form of activity is a niche area or whether it will be a widespread approach to the business meeting.

Some of the reasons that potentially prevent its widespread use are the current cost/benefit balance and the fact that historically special meeting rooms with the need for pre-booking have been required.

In contrast, traditional telephony has relied upon the ubiquitousness of telephones and the ability to "do it now" with no planning or pre-booking. Such an approach makes communication and problem-solving both more efficient and more satisfactory.

There are certainly many instances when one would prefer to only talk to people rather than make a videotelephone call. One may not be smartly dressed, one may not be located in front of the videotelephone or the lighting might be completely inappropriate.

Nevertheless, if one were to be away from one's family for significant periods of time, seeing and hearing one's spouse and children with high quality sound and vision would clearly represent an attractive niche area.

In terms of information and entertainment it is not generally possible for individuals or organisations to reach large numbers of like-minded people, as individuals with a particular interest are not likely to be geographically collocated but are likely to be widely dispersed within the wider community.

As a particular example, one would imagine that steam engine enthusiasts are spread throughout the country rather than living in the same area, and therefore there is no one cinema in the UK that would have a particular interest in showing films on steam engines.

To some degree telephone services have addressed the problem that, in today's world, broadcasting is a satisfactory solution for mass interests but that narrowcasting is required if people's choices are to be significantly extended.

In addition to videotelephony's use today as a one-to-one medium, whether for individuals or groups, it can be used to link more than two locations together using MCUs (multipoint conferencing units) that allow many videophone users to have an audio conference, with each viewer seeing either the current or last speaker, a selected individual or group or, in some circumstances, typically when there are five sites or less, all of the other participants in a split screen presentation.

There have also been developments in videotelephony servers that provide
videophone services
video mail
video live feed
video conferencing with and without recording
video message delivery, etc.

Examples of a number of types of service have been provided by Telsis Limited for some time on +44 (0)1489 554944 and more recently demonstration services have been provided by some of the company's customers using the Telsis VideoCall server. As an example, Deutsche Telekom have used VideoCall for demonstrations at CeBit 1997.

As a particular example of the programmable flexibility offered by VideoCall, a brief description of the Weather service follows:-

A satellite receiver is used to capture infrared pictures of cloud cover over Europe from the Meteosat satellite every half hour. When callers access the weather service on VideoCall, they see a stored sequence of images covering the last twelve hours which provide an indication of the movement of the weather system.

In addition to point-to-point systems, it is anticipated that developments in PBXs, ACDs and server technology will mostly follow the traditional voice telephony route as the capability to handle images and p x B call routing is added to systems.

Such systems give rise to some special issues, for example whereas a voice telephony call can be freely forwarded, in videotelephony it is necessary to hold "sync" with the other videophone as the call is passed from one videophone to another and especially so if, as part of the forwarding, transfer or pick up process, the call is at some stage handled by an ordinary voice telephone before arriving at a videophone.

WO-A-9 716 014 discloses a video telecommunications routing technique in which video calls are initiated by a video device having prestored telephone numbers. The video device then calls the central exchange. The video call occupies at least two telephone channels, and the system identifies the second channel, thereupon connecting to the video device.

It is an aim of at least an embodiment of the present invention to provide a technique that involves not the development of videotelephony itself but the linking together of videotelephony and broadcasting.

According to the present invention there is provided a videotelephone communication system comprising videotelephony server means allowing access for a broadcasting caller using a videophone to a channel of the videotelephony server means, and access means responsive to video calls on an associated telephone number corresponding to that channel of the videotelephony server means, access being allowed to a plurality of video calls such that the broadcasting caller may broadcast to a plurality of video viewers who have made the video calls.

In a preferred embodiment of the invention, the access means includes call divert means operable to divert video calls on the associated telephone number to the corresponding channel. Preferably, video calls may be diverted to the respective channel when the associated telephone number is, or includes, the video telephone number of the broadcasting caller.

The access means may check the calling line identity (CLI) signal of the broadcasting caller and/or the video viewers before permitting access.

The access means may be configured so as to permit access to the system for video viewers only upon their acceptance by the video broadcaster.

The videotelephony server means preferably includes a plurality of channels allowing access to a plurality of broadcasting callers, each channel being accessible to video viewers by means of its respective associated number.

The videotelephony server means may be connectable to a video camera on at least one channel, and this may be by means of a telephone network.

The videotelephony server means preferably allows a user to enter information to a memory thereof, which information can subsequently be browsed by video viewers.

The videotelephony server means may include a database holding access information for the system.

Although it is known in voice telephony for a special service or special line to provide a live feed for "broadcasting" a service to other callers - a good example in the UK is the Rapid Raceline live race commentary - it has not been known for this broadcasting capability to be available to any subscriber on an on-demand basis.

Whereas one can imagine a small number of users for an technique that allows any voice only phone to provide a broadcast service, there are many more possibilities for such a system that is operable with videophones, particularly as the image quality improves towards broadcast quality.

In addition, whereas finding information is difficult in a voice-only environment as there is no way to provide an easy and rapid audio browser, a preferred embodiment of the invention described here also provides a mechanism to allow "videophone broadcasters" to provide indexing information; in this way "videophone viewers" can find and view subject matter to suit their own interests.

The preferred embodiment of the invention provides a system intended for installation and use by a public network operator, although similar systems could be used by other organisations on a public, private or semi-private basis.

The invention will now be described by way of example with reference to the accompanying drawings, throughout which like parts are referred to by like references, and in which:
Figure 1 is a block diagram of a conventional voice-only telephony system;
Figure 2 is a block diagram of a videophone telephony system;
Figure 3 is a block diagram of videophone system allowing access to a remote camera;
Figure 4 is a block diagram of a system providing a live feed from a camera to a number of callers;
Figure 5 is a block diagram of a videophone broadcasting system according to one embodiment of the invention;
Figure 6 is a block diagram of a videophone broadcasting system according to another embodiment of the invention, involving a more complex enhanced network;
Figure 7 is a block diagram showing a system with digital and data interfaces for respective connection to a telephone network and external processing systems;
Figure 8 is a block diagram of a system with a front end switch;
Figure 9 is a block diagram of a system including a codec;
Figure 10 is a block diagram of a system including a central processing unit for providing flexible routing capability;
Figure 11 is a block diagram of a system similar to that of Figure 10, but further including a memory; and
Figure 12 is a block diagram of a system similar to that of Figure 11, but further including a database.

In order to facilitate the description of the preferred video broadcasting system (VBS), its operation from the user's viewpoint will first be described.

A videophone user can make conventional calls, either audio or video, or use an audio or video server, either network or privately based; however, the user can also call into the VBS in a number of ways. The most common are described below based on a hypothetical numbering scheme; other schemes are possible, including single number access.
- 0191 191 191: This is an unrestricted live feed facility. Callers to the user's videophone number receive the image and sound from the user's videophone. An example might be the mayor of a town who gives a 15 minute review of events and activities in the town every Friday at 1000. The mayor's videophone number is 01489 554900, at 0955 he calls 0191 191 191 and thereafter until he clears down all callers who dial 01489 554900 will receive a feed from his videophone. The network events are as follows: when he dialled into the VBS it sent a command to the main telephony network to divert on busy callers to 01489 554900 to the VBS. This then uses the divert information to connect a caller to a feed from the mayor's videophone.
- 0191 192 193: This is a restricted live feed capability. Callers to the user's videophone number can only access the feed from the videophone if they meet some accepted criteria, e.g. their CLI has been preregistered, they agree to pay an access charge, the videophone user individually accepts each caller, etc. An example might be a keep fit instructor who takes a class each morning for a pre-arranged fee, all participants watch and listen and stretch and sweat privately in their own home - thereby receiving instruction and encouragement simply and cheaply.
- 0191 190 190: This is the management service, it allows users to enter information in data and video format so that potential callers can browse for subjects of interest and can select from competing offers. As an example, a caller to the info service (see below) can browse for relevant subject matter and can then browse short "promo" clips, e.g. select which of the keep fit instructors seem most suitable, economical and friendly.
- 0191 11 99 11: This is the info service that is used by potential callers to find subjects of interest. It may include a video clip bulletin board for What's New information.

Clearly, the actual access and user features for both "broadcasters" and "viewers" can be provided in a number of ways, but the key innovation for a customer is the ability for any videophone to provide broadcast capability and for any viewer to have access to a broadcast feed, even though many viewers will want access to the most popular feeds, and for this capability to be available without the need for any pre-agreements.

Although in the above description "viewers" call the broadcaster's videophone number, it is also anticipated that in addition to an actual network number it will be possible to associate service or virtual numbers with videophones. Thus, for example, in the case of the Mayor of Fareham, one could dial perhaps 01329 010101 (where 01329 is the area code for Fareham) or on an alphanumeric equipped keypad MAYOR FAREHAM or using a virtual number with a premium rate access code 0900 3273426 (i.e. FAREHAM), etc.

Some system configurations are shown in the drawings.

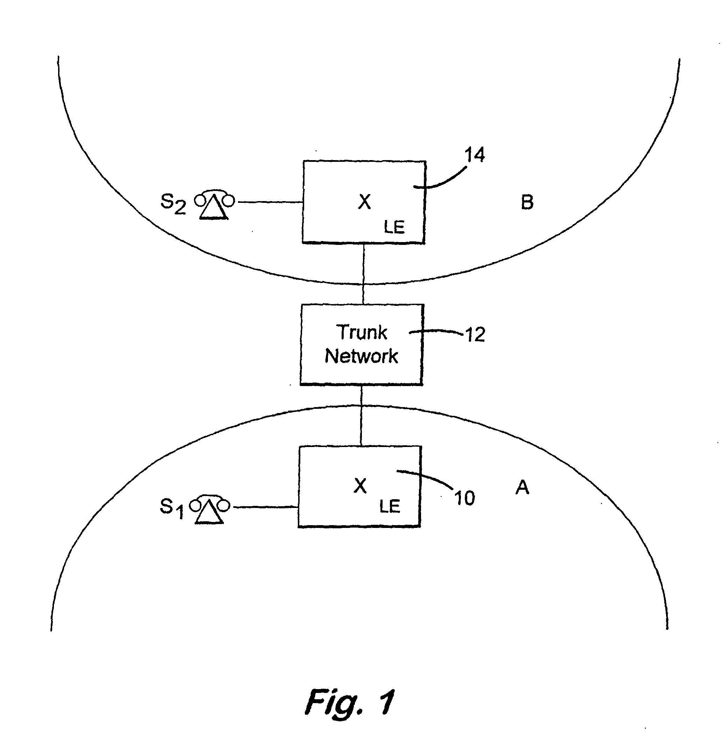

Figure 1 shows a conventional (traditional) voice telephony system having a configuration in which a subscriber S1 connected to a local exchange (LE) 10 in an area A can communicate via a trunk network 12 with a subscriber S2 connected to a local exchange 14 in an area B.

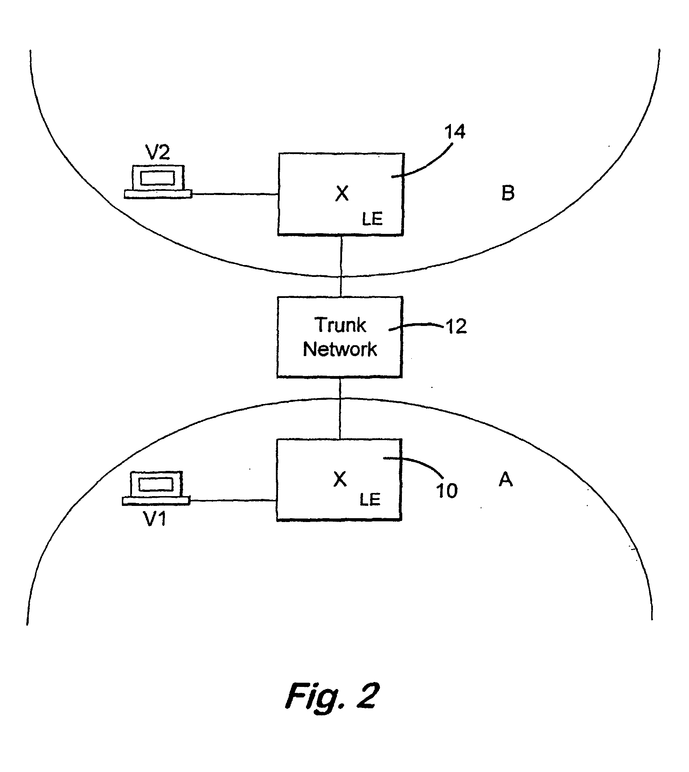

The system of Figure 2 is similar to that of Figure 1 except that the telephone voice handsets for the subscribers are replaced by videophones V1, V2 allowing videotelephony communication.

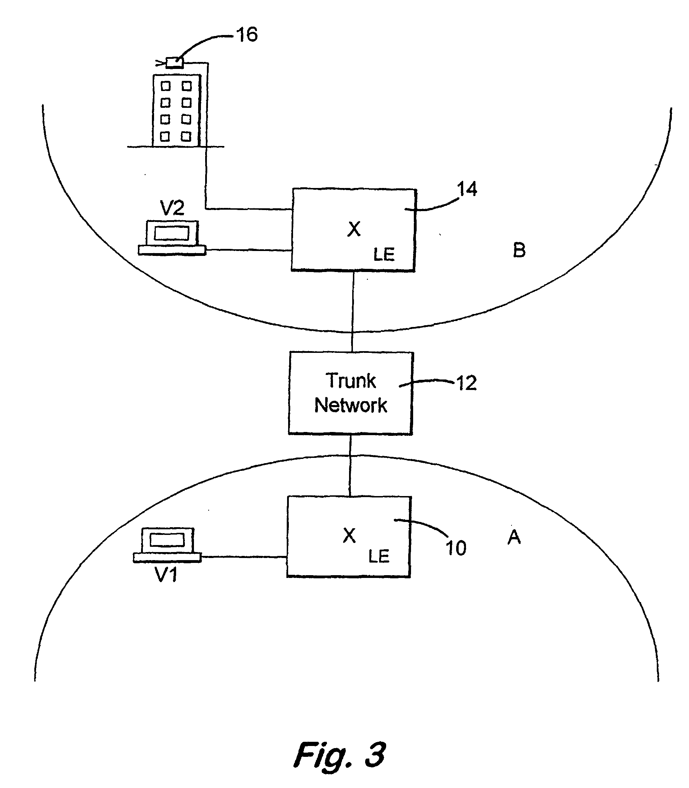

Figure 3 is based on Figure 2, but with the addition of a remote camera 16. A single caller from one of the videophones V1, V2 can access the video camera 16.

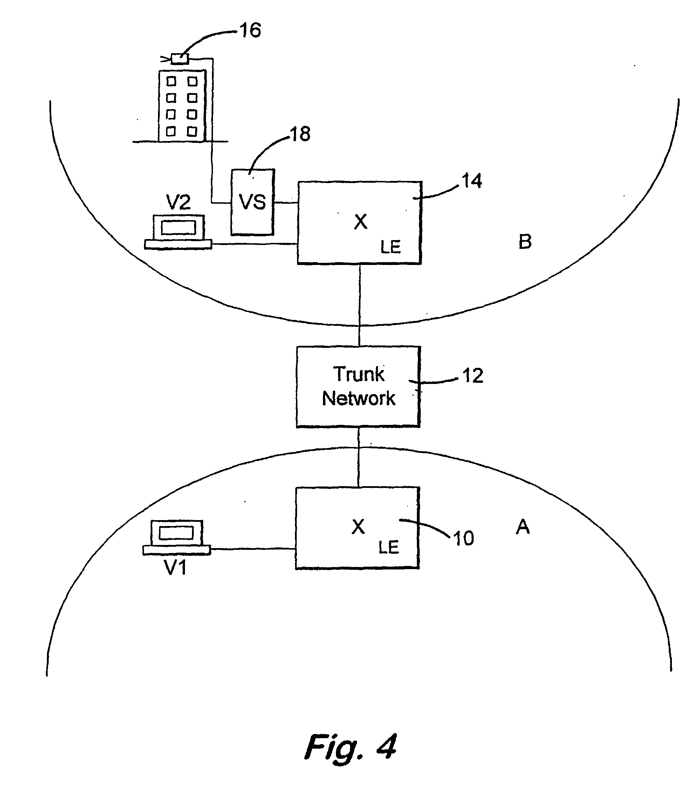

In Figure 4, it will be noted that the addition of a videotelephony server (VS) 18, such as the previously-mentioned Telsis VideoCall, having the capability of handling a large number of calls to/from the local exchange 14, makes it possible for a live feed from the camera 16 (or other source) to be provided to a large number of video callers.

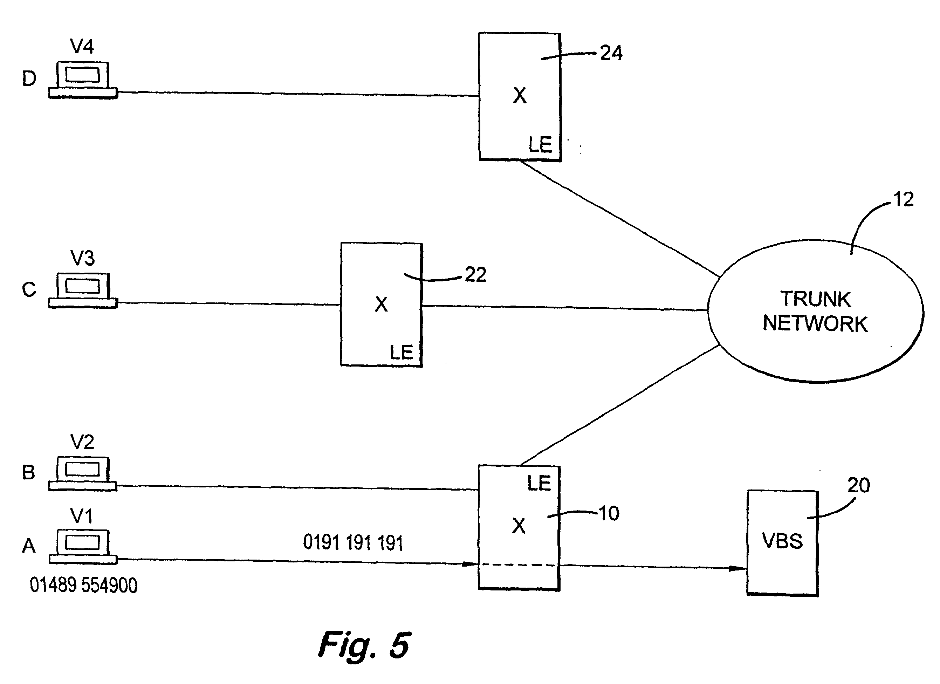

Figure 5 shows a basic configuration using a video broadcasting system (VBS) 20. Caller A has called 0191 191 191 and has been connected to a channel of a videotelephony server within the VBS 20, via the local exchange 10. Subsequently, when callers B, C and D call 01489 554900 (which is the telephone number of the videophone V1) on their videophones V2, V3, V4, respectively, they are diverted on "engaged" to the VBS 20 from which they receive a video and audio feed from caller A's videophone V1. It will be noted that, as in the case of the videophone V2, connection to the VBS 20 can be via the same local exchange 10, or, in the cases of the videophones V3, V4, connection can be via respective local exchanges 22, 24, the trunk network 12 and the local exchange 10. Accordingly, anyone connected to a VBS enhanced telephone network can be a video broadcaster, and anyone anywhere can be a viewer.

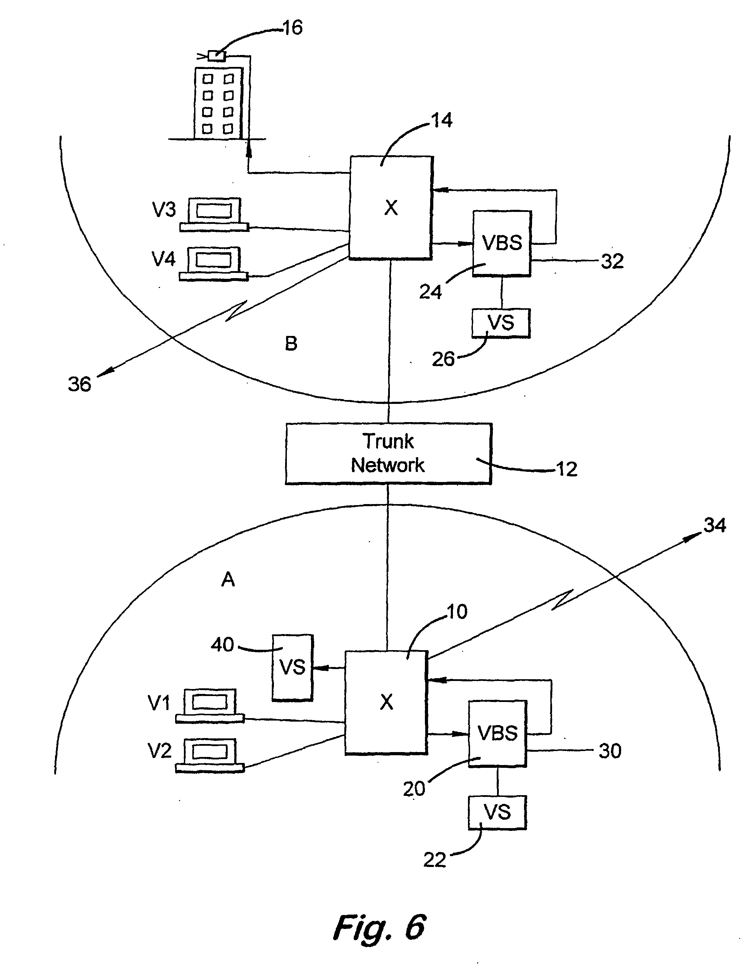

Figure 6 shows a more developed VBS enhanced network. In this network, there is a local exchange 10 for an area A, and a local exchange 14 for an area B, these being connected by the trunk network 12. The videophones V1, V2 are connected to the local exchange 10, and the videophones V3, V4 are connected to the local exchange 14. A remote camera is connected to the exchange 14. The local exchange 10 is connected to a VBS 20 which has provision for a separate or integrated videotelephony server (VS) 22. Likewise, the local exchange 14 is connected to a VBS 24 which also has provision for a VS 26. The videotelephony servers 22, 26 can provide recording and start-at-the-beginning features so that the video broadcasts need not be only live broadcasts. Each VBS 20, 24 may be provided with a respective port 30, 32 for the input of other local live feed services. Each VBS and VS combination may also be provided with dial-out capability, so that certain live feeds accessed at increased costs, possibly internationally over links 34, 36, are only made available when selected by one, or more than one, callers. A further videotelephony server (VS) 40 may be connected to the local exchange 10. In such a system as described with reference to Figure 6 (and also Figure 5), CLI signalling may be used to restrict access to the system, for example to the video viewers if the broadcaster wishes to provide a restricted live feed capability, and/or to the prospective video broadcaster if it should be desired for any reason (such as a bad payment record) to exclude any video numbers from broadcasting access to the system.

Enhancing a telephone network with VBS as described offers a large number of advantages. In so far as road traffic is concerned, this would allow one to choose appropriate routes by skipping up a major trunk route by camera, looking for potential traffic jams. With regard to security issues, the ability to access any CCTV camera in the United Kingdom would give people who were homebound through sickness or age a real community purpose, as they could monitor public areas and with the ability to videotape anything they think is suspicious or inappropriate. Although this would seem to throw up some privacy issues, it is not very different from times past when older people were out and about in small communities.

In addition, one can imagine cameras placed on particularly useful or attractive locations, such as on the Great Barrier Reef or on the entrance to harbours.

However, perhaps the biggest advantage of such an approach would be the change in the broadcasting area in that, whereas one might currently envisage hundreds of channels, one can literally foresee tens of thousands of channels in a VBS enabled network, as any amateur club or society or commercial organisation provides camera feed points to cover specific events or activities.

So, for example, one might find that a local ornithologist gave a quarter of an hour talk from his home every week, a local chess enthusiast offered a half hour introduction to chess once a week, a local keep-fit expert had a morning get-going class; in fact, anything that is of interest can be easily and cheaply provided in high quality colour.

Any practical system requires access control and a billing mechanism and also simple techniques for finding appropriate information so that, for example, one might have the ability to find at any time of day or night a live chess match or football match or squash match or whatever specific interest someone or some company thought it was worth providing into the switched feed network.

The VBS will now be described in more detail.

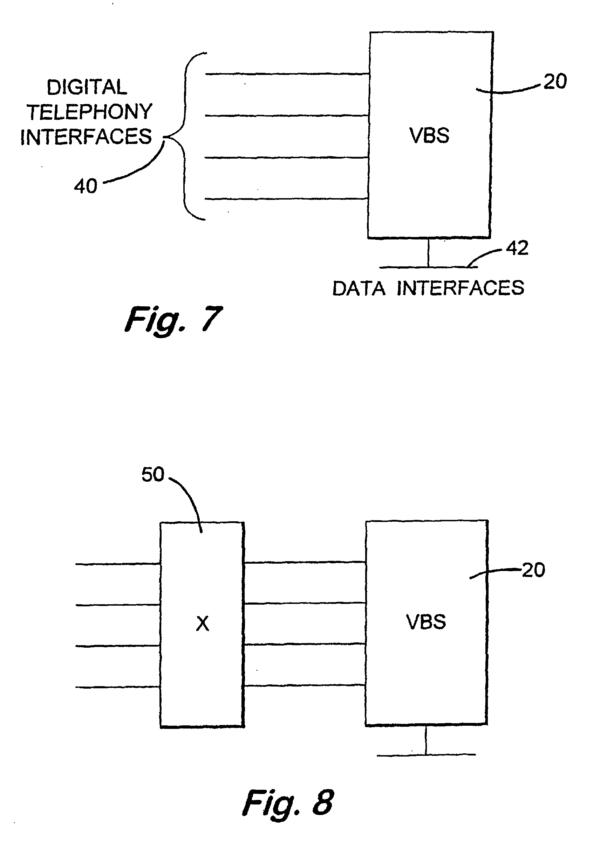

At its highest level of representation, the VBS may be as shown in Figure 7, which shows a system 20 with digital interfaces 40 for connection to a telephone network and data interfaces 42 for connection to external processing systems.

As video calls will often use more than one B channel, at some point in the system the channels associated with a given call must be grouped together. This facility may be provided by the network directly; alternatively, within the VBS provision must be made for such grouping.

Figure 8 shows a representation of a VBS 20 with a front end switch 50 which uses a CLI (calling line identity) based matching algorithm to ensure that, however the calls arrive on the system, they are grouped together for processing purposes.

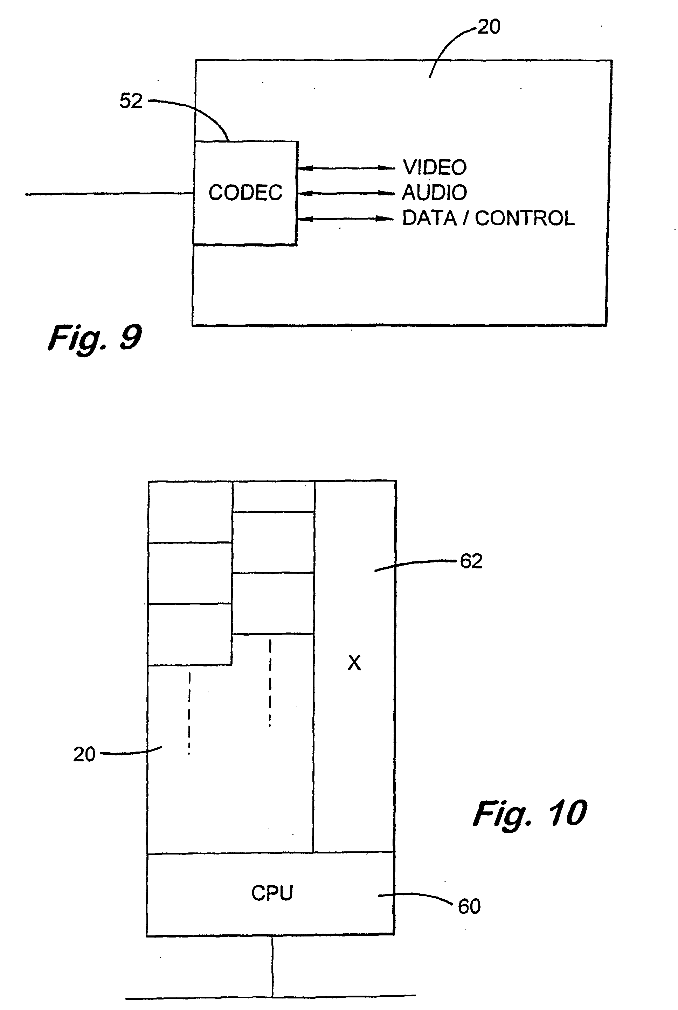

Each group of calls associated with a given videophone call is passed to a codec 52 as shown in Figure 9, which interfaces with the remainder of the VBS 20 via a number of buses. Those shown here are separate video and audio buses and a third data/control bus. However, other bus configurations are possible and, in particular, the audio and video streams may be in a combined audio/video format and the data and control interfaces may be separate.

The routing capability that allows a videophone feed to be viewed by a large number of other videophone viewers is provided under the control of a central processing unit (CPU) 60, as shown in Figure 10, which processes both telephony and data information and controls the route of the streams within the VBS 20 using a full availability switch 62 such that the incoming feed from one phone may be routed to any number of other phones.

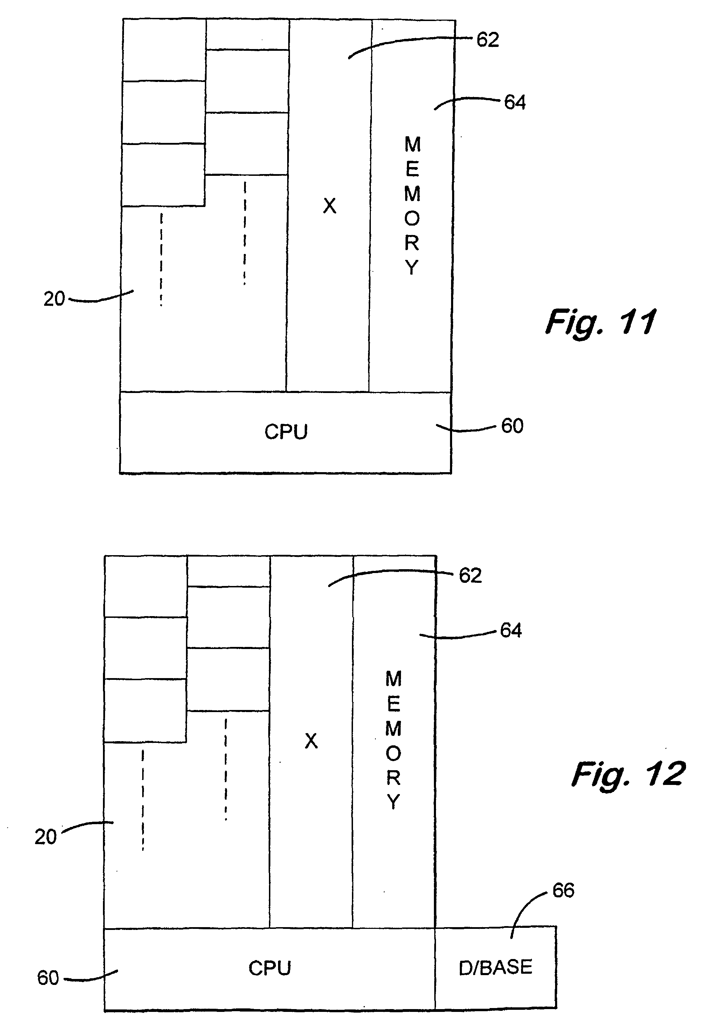

In addition to routing between videophones it will be necessary to display guidance and explanatory information, and this may be held in an associated memory 64, as shown in Figure 11, such that the CPU 60, with control of access to the memory 64, and also of the internal switch 62, can route as appropriate audio/video segments to a caller.

This memory 64 may also incorporate character generating capability so that the CPU 60 can send text messages to individual videophones.

In order to provide restricted access to a videophone broadcast feed, the CPU 60 may have associated with it, as shown in Figure 12, a database 66 which holds the relevant access information and is structured so that this information can be changed by the CPU 60 as a result of videophone calls or by other control mechanisms.

This configuration also provides under the programmable control of the CPU 60 for a number of other service structures, of which the most useful is a browser service through which callers can access all current live feed sources. In order to make this particularly useful, the VBS 20 may be designed to accept both numeric and alphanumeric input from callers so that a broadcaster can associate key words with the broadcast in order that viewing callers can locate subject matter of interest to them.

The CPU 60 can provide a programmable environment under the control of a video service language so that the service structure of the various services offered can be modified and enhanced in the light of user experience.

Although a description of various examples of the VBS 20 has been provided, there are also some considerations relating to the integration of a number of such VBSs in a network. In particular, if we assume at any time that there are a number of international feeds from sources such as the space station, the Great Barrier Reef, etc, it is uneconomic for a national network to make additional calls, and therefore a routing plan to ensure that further requests for such fbeds are routed nationally to the appropriate point will bring significant economic advantages to the operator and callers. However, although important to the overall integration of the systems, they are matters of detail when compared to the fundamental ability of the VBS to effectively link telephony and broadcasting for the first time.

## Claims

1. A videotelephone communication system comprising:
videotelephony server means (22;26) allowing access for a broadcasting caller using a videophone (e.g. V1) to a channel of said videotelephony server means (22;26); and
access means (20;24) responsive to video calls on an associated telephone number corresponding to said channel to allow access to that channel of the videotelephony server means (22;26), access being allowed to a plurality of video calls such that the broadcasting caller may broadcast to a plurality of video viewers who have made the video calls.

2. A system according to claim 1, wherein the access means (20;24) includes call divert means operable to divert video calls on the associated telephone number to said channel.

3. A system according to claim 2, wherein the call divert means is operable to divert video calls to said channel when the associated telephone number is, or includes, the video telephone number of the broadcasting caller.

4. A system according to claim 1, claim 2 or claim 3, wherein the access means (20;24) is operable to check the calling line identity signal of the broadcasting caller and/or the video viewers before permitting access.

5. A system according to any one of the preceding claims, wherein the access means (20;24) is operable to permit access to video viewers only upon their acceptance by the video broadcaster.

6. A system according to any one of the preceding claims, wherein the videotelephony server means (22;26) includes a plurality of channels allowing access to a plurality of broadcasting callers, each channel being accessible to video viewers by means of its respective associated number.

7. A system according to any one of the preceding claims, wherein the videotelephony server means (22;26) is connectable to a video camera (16) on a channel thereof.

8. A system according to claim 7, wherein the video camera (16) is connectable to the videotelephony server means (22;26) via a telephone network (14).

9. A system according to any one of the preceding claims, wherein the videotelephony server means (22;26) is operable to allow a user to enter information to a memory (64) thereof, which information can be subsequently browsed by video viewers.

10. A system according to any one of the preceding claims, including a database (66) holding access information for the system.

## Patentansprüche

1. Bildtelefonkommunikationssystem, das aufweist:
eine Bildtelefonservereinrichtung (22, 26), die den Zugriff für einen sendenden Anrufer unter Verwendung eines Bildtelefons (z.B. V1) auf einen Kanal der Bildtelefonservereinrichtung (22, 26) erlaubt, und
eine Zugriffseinrichtung (20, 24), die auf Video- bzw. Bildanrufe auf einer verknüpften Telefonnummer, die dem besagten Kanal entspricht, reagiert, um Zugriff auf diesen Kanal der Bildtelefonservereinrichtung (22, 26) zu erlauben, wobei einer Mehrzahl von Videoanrufen Zugriff erlaubt wird, so daß der sendende Anrufer zu einer Mehrzahl von Video- bzw. Bildbetrachtern, die die Bildanrufe gemacht haben, senden kann.

2. System nach Anspruch 1, wobei die Zugriffseinrichtung (20, 24) eine Anrufumleiteinrichtung beinhaltet, die derart betrieben werden kann, daß sie Bildanrufe auf der verknüpften Telefonnummer auf den Kanal umleiten kann.

3. System nach Anspruch 2, wobei die Anrufumleiteinrichtung derart betreibbar ist, daß sie Bildanrufe auf den besagten Kanal umleitet, wenn die verknüpfte Telefonnummer die Bildtelefonnummer des sendenden Anrufers ist oder diese beinhaltet.

4. System nach Anspruch 1, Anspruch 2 oder Anspruch 3, in dem die Zugriffseinrichtung (20, 24) derart betreibbar ist, daß sie das Identitätssignal der anrufenden Leitung des sendenden Anrufers und/oder des Bildbetrachters überprüft, bevor Zugriff erlaubt wird.

5. System nach einem der vorherigen Ansprüche, wobei die Zugriffseinrichtung (20, 24) derart betreibbar ist, daß sie den Videobetrachtern Zugriff nur dadurch erlaubt, daß der Videosender sie akzeptiert.

6. System nach einem der vorherigen Ansprüche, wobei die Bildtelefonservereinrichtung (22, 26) eine Mehrzahl von Kanälen beinhaltet, die den Zugriff auf eine Mehrzahl von sendenden Anrufern erlaubt, wobei von Videobetrachtem auf jeden Kanal mit Hilfe seiner entsprechenden verknüpften Nummer zugegriffen werden kann.

7. System nach einem der vorherigen Ansprüche, wobei die Bildtelefonservereinrichtung (22, 26) mit einer Videokamera (16) auf einem Kanal hiervon verbindbar ist.

8. System nach Anspruch 7, in dem die Videokamera (16) mit der Bildtelefonservereinrichtung (22, 26) über ein Telefonnetzwerk (14) verbindbar ist.

9. System nach einem der vorherigen Ansprüche, in dem die Bildtelefonservereinrichtung (22, 26) derart betreibbar ist, daß sie einem Benutzer erlaubt, Information in einen Speicher (64) hiervon einzugeben, wobei diese Information im folgenden von Bildbetrachtern angesehen werden kann.

10. System nach einem der vorherigen Ansprüche, das eine Datenbank (66) enthält, die die Zugriffsinformation für das System beinhaltet.

## Revendications

1. Système de télécommunications par téléphone vidéo comprenant :
un moyen serveur de téléphonie vidéo (22 ; 26) permettant l'accès à un canal dudit moyen serveur de téléphonie vidéo (22 ; 26) pour un demandeur de télédiffusion utilisant un visiophone (par exemple V1) ; et
un moyen d'accès (20 ; 24) réagissant à des appels vidéo sur un numéro de téléphone associé correspondant audit canal pour permettre au moyen serveur de téléphonie vidéo (22 ; 26) d'accéder à ce canal, l'accès étant permis à une pluralité d'appels vidéo de sorte que le demandeur de télédiffusion peut télédiffuser vers une pluralité de spectateurs vidéo qui ont établi les appels vidéo.

2. Système selon la revendication 1, dans lequel le moyen d'accès (20 ; 24) inclut un moyen de déviation d'appel pouvant fonctionner de façon à dévier des appels vidéo sur le numéro de téléphone associé audit canal.

3. Système selon la revendication 2, dans lequel le moyen de déviation d'appel peut fonctionner de façon à dévier des appels vidéo audit canal lorsque le numéro de téléphone associé est, ou inclut, le numéro de téléphone vidéo du demandeur de télédiffusion.

4. Système selon la revendication 1, la revendication 2 ou la revendication 3, dans lequel le moyen d'accès (20 ; 24) peut fonctionner de façon à vérifier le signal d'identité de ligne appelante du demandeur de télédiffusion et/ou des spectateurs vidéo avant de permettre l'accès.

5. Système selon l'une quelconque des précédentes revendications, dans lequel le moyen d'accès (20 ; 24) peut fonctionner de façon à permettre l'accès à des spectateurs vidéo seulement suite à leur acceptation par le télédiffuseur vidéo.

6. Système selon l'une quelconque des précédentes revendications, dans lequel le moyen serveur de téléphonie vidéo (22 ; 26) inclut une pluralité de canaux permettant l'accès à une pluralité de demandeurs de télédiffusion, chaque canal étant accessible à des spectateurs vidéo au moyen de son numéro associé respectif.

7. Système selon l'une quelconque des précédentes revendications, dans lequel le moyen serveur de téléphonie vidéo (22 ; 26) peut être relié à une caméra vidéo (16) sur un de ses canaux.

8. Système selon la revendication 7, dans lequel la caméra vidéo (16) peut être reliée au moyen serveur de téléphonie vidéo (22 ; 26) par l'intermédiaire d'un réseau de téléphonie (14).

9. Système selon l'une quelconque des précédentes revendications, dans lequel le moyen serveur de téléphonie vidéo (22 ; 26) peut fonctionner de façon à permettre à un utilisateur de rentrer des informations dans une mémoire (64) de celui-ci, cette information pouvant être par la suite parcourue par des spectateurs vidéo.

10. Système selon l'une quelconque des précédentes revendications, incluant une base de données (66) gardant les informations d'accès pour le système.
